# EUROPEAN PATENT APPLICATION

(11) **EP 1 775 047 A1**
(43) Date of publication of application: **18.04.2007**
(21) Application number: 05748659.9
(22) Date of filing: 10.06.2005
(51) Int. Cl.: B23D 33/08, B23D 23/00

(54) **CUTTING METHOD AND CUTTING DEVICE**

(30) Priority: 11.06.2004 JP 2004174129
(71) Applicant: MANYO CO., LTD., Osaka 5310077 (JP)
(72) Inventor: SHIOKAWA, Hiroyasu, c/o MANYO CO. LTD., Kita-ku, Osaka-shi, Osaka 5310077 (JP)
(74) Representative: Steinmeister, Helmut
(86) International application number: PCT/JP2005/010681
(87) International publication number: WO 2005/120757

(57) **Abstract**

[Problem to be Solved] To obtain a high-quality billet with a minimum amount of deformation, the billet is borne in an optimum condition during cutting.

[Solution Means] When moved downward, a movable cutting tool 4 begins to cut into stock while causing a distortion to the stock. At this time, a billet bearing shoe 15 bears the billet from below. When a ram 2 further moves downward, a projecting cam 26 moves along an inclined surface 24 of a recessed cam 23 on a shoe support shaft 17 against the force of coned disk springs 30. Upon completion of the fracture of the billet, the projecting cam 26 sliding along the inclined surface 24 runs onto the outer peripheral surface of the shoe support shaft 17, and the billet bearing shoe 15 withdraws so that the billet can drop.

## Description

### Technical Field:

The present invention relates to a cutting method for cutting stock, e.g. bar stock, and also relates to an apparatus for the cutting method. More particularly, the present invention relates to a cutting method wherein restrained bar stock of continuous length is cut into pieces of standard size by shearing force to obtain blanks for forging. The present invention also relates to an apparatus for the cutting method.

### Background Art:

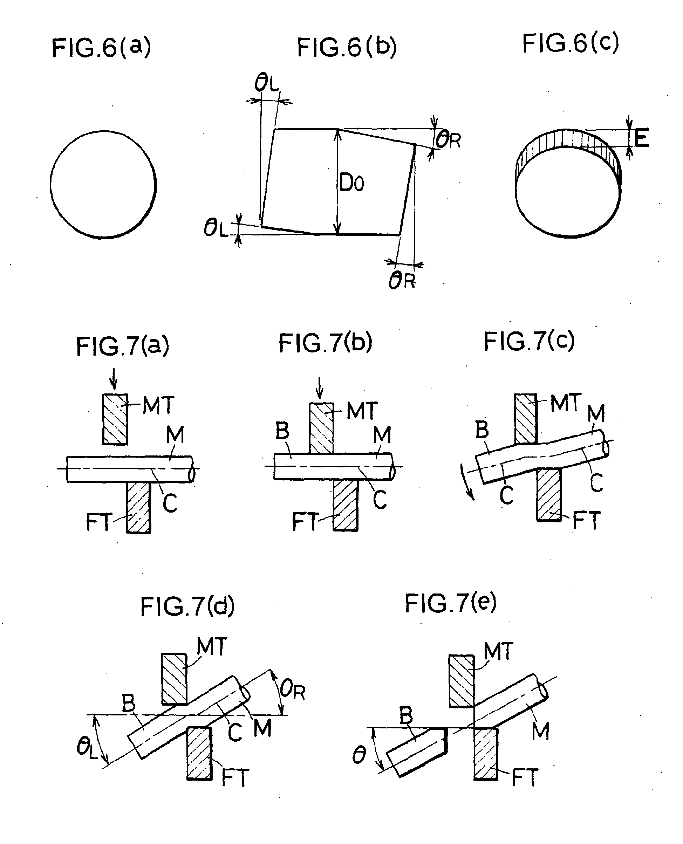

To obtain blanks for forging, bar stock of continuous length is cut into pieces of standard size. For mass-production of blanks for forging, continuous bar stock is cut into pieces of standard size or short length by applying shearing force to the bar stock with a shearing machine. Bar steel of 5 to 6 meters in length with a circular or rectangular cross-section, which is known as standard-size material, is cut by shearing with two (upper and lower) crossed cutting tools each having a semicircular arc shape adapted to conform to the outside diameter of the bar steel. Figs. 6(a), 6(b) and 6(c) are external views of a billet (cut-off piece of bar steel) showing defects in shape, such as distortion, inclination, and weight variation. As shown in Fig. 6, billets cut by the conventional cutting system have many defects such as distortion, inclination and weight variation.
As a criterion for the judgment of the quality of billets, "cutting accuracy" is used. Three factors are known as indications of the billet cutting accuracy. The three factors are: the weight error (Wₑ%) of a produced billet with respect to a target weight Wₒ; the end face perpendicularity (θₒ); and the degree of deformation (E/Dₒ). These factors appear to be independent of each other but are actually correlated to each other. If the end face perpendicularity (θ_{R}, θ_{L}) is good (the closer θ approaches 0, the better), the weight error (Wₑ%) is also good (the closer Wₑ approaches 0, the better), and the deformation degree (E/Dₒ) also decreases (the closer E/Dₒ approaches 0, the better).

In short, the cutting system of the present invention aims at obtaining billets of high accuracy as close to those of perfect circular or rectangular columnar billets as possible, although such perfect columnar billets may be impossible to obtain. In the following, the present invention will be explained using the end face perpendicularity as the criterion of cutting accuracy. There are various methods of cutting bar steel, e.g. gas cutting, saw cutting, grindstone cutting, laser beam cutting, plasma cutting, etc. With any of these methods, material can be cut such that the end face of the cut material is substantially perpendicular to the axial direction of the material. Meanwhile, the shearing cutting method to which the present invention pertains cuts material by forcing two cutting tools to press against and cut into the material. Therefore, billets cut by this method are deformed as shown in Fig. 6 and produced including various defects.

Figs. 7(a) to 7(e) are views schematically showing the progress of deformation of a billet during cutting. The largest cause of the deformation is as follows. As shown in Figs. 7(a) to 7(c), from the beginning of cutting bar stock M as the material to be cut, i.e. from the time when a movable cutting tool MT contacts and cuts into the bar stock M placed on a fixed cutting tool FT to progress cutting, to the end of the cutting process, i.e. to the time when a billet B is cut off from the bar stock M, the axis C of the billet B being cut off and the axis C of the remaining bar stock M cannot be held horizontal, but the billet B and the bar stock M are tilted during the cutting operation. The phenomenon that the forward end of the bar stock M bows downward as cutting is initiated is called "top bend". When top bend occurs, the billet B is cut off with the axis thereof kept tilted forwardly downward as shown in the figure. As a result, the end face of the billet B has an angle of inclination corresponding to the amount of tilt of the axis.

Similarly, the material remaining on the opposite side of the cutting tools jumps up when it is cut, and the axis C thereof tilts upward. As a result, the forward end face of the remaining bar stock M is not cut perpendicularly but obliquely. It should be noted that Figs. 7(c) and 7(d) illustrate the cutting process schematically to facilitate understanding. That is, the inclination angles (θR, θL) are shown to be large. In actuality, an inclination angle of about 5° at maximum occurs. A cutting condition indispensable for obtaining a billet B having a perpendicular cut face and minimum distortion by the above-described cutting system has been academically clarified. The indispensable condition is to complete the cutting process in a state where the axis of the billet B and the axis of the remaining bar stock M are kept horizontal completely from the beginning to the end of the cutting process.
To minimize the deformation of billets B caused for the reasons stated above, various restrained cutting systems have been proposed. These systems employ a method of cutting bar stock M while applying various additional restrains to the bar stock in such a manner as to perform attitude control to keep the bar stock horizontal just before or at the same time as the bar stock is cut. Among them is known an axially restrained cutting system in which bar stock M held between two rollers is fed in the center axis direction thereof, and the forward end face of the bar stock M is pressed against a sizing device S serving as a stopper. In this state, the bar stock M is cut by shearing with two cutting tools.

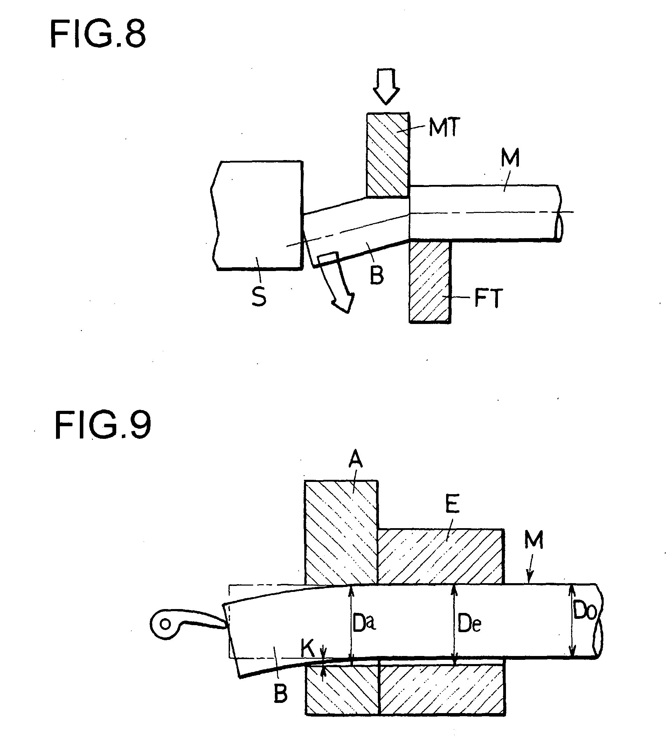

With the axially restrained cutting system, the bar stock M is cut while being kept horizontal in theory. With this system, the expected purpose can be achieved for stock of hard material, but in the case of stock of soft material, deformation occurs. Fig. 8 is a schematic view showing deformation of a billet when cut by the axially restrained cutting system. As shown in Fig. 8, at the same time as the movable cutting tool MT begins cutting, a part of the forward end upper portion of the billet B is distorted and depressed by strong force acting thereon to cause top bend. As a result, the axis of the billet is tilted undesirably. To prevent this problem, a restrained cutting system has been proposed and used in which round cutters each having a through-hole for retaining bar stock M extending therethrough are used as both movable and fixed cutting tools (for example, see Patent Document 1).

The proposed system is called "twin-round cutter restrained cutting system", in which two cutting tools are provided in their centers with respective through-holes having a diameter substantially equal to that of the material to be cut. The material is passed through the through-holes and cut in the state of being held therein. Therefore, the material cannot top-bend substantially. Fig. 9 is a schematic view showing deformation of a billet when cut by the twin-round cutter restrained cutting system. With this system, as shown in Fig. 9, the inside diameter Dₑ of the through-hole in the fixed cutting tool E needs to be slightly larger than the outside diameter Dₒ of the material (bar stock) M in order to allow the forward end of the material M to pass smoothly. In addition, the inside diameter Dₐ of the through-hole in the movable cutting tool A needs to be larger than the inside diameter Dₑ in view of the positional accuracy of repeated stop of the movable cutting tool A. If the inside diameter Dₐ of the through-hole in the movable cutting tool A is not larger than the inside diameter Dₑ, the forward end of the bar stock M cannot pass smoothly.

Consequently, the inside diameter Dₐ of the movable cutting tool A is considerably larger than the outside diameter Dₒ of the material M. As a result, it becomes impossible to avoid occurrence of a gap K between the material M and the through-hole in the movable cutting tool A. Therefore, as the cutting operation begins, the forward end portion of the billet B tilts within the range of the gap K. Accordingly, the restraint effect is also lessened. There is another system, known as "upholding system", in which the top bend occurring during cutting is borne right under the upper cutting tool directly with force applied counter to the top bend by using an air or oil-hydraulic cylinder. In this system, just before the beginning of cutting, the lower side of the material is borne with the piston rod of a hydraulic cylinder, e.g. an air or oil-hydraulic cylinder. When the movable cutting tool begins to cut the material, the material and the piston rod move downward together as the movable cutting tool moves downward under pressure to cut the material.
The disadvantage of this system is as follows. Because restraint force is applied to the material from below by using a hydraulic cylinder, the maximum load of the cylinder capacity cannot be generated at the moment when the maximum restraint force is required, i.e. during a short period of time from the beginning to the end of cutting (or a short distance through which the piston moves downward under load). On the contrary, the resisting force of the piston-cylinder assembly increases (as a result of the fluid being more compressed) as the movable cutting tool approaches the bottom dead center after the cutting operation has already finished. Thus, such an irrational phenomenon occurs because of the nature of the hydraulic cylinder.

Consequently, it is necessary to use a hydraulic cylinder having a considerably large capacity for the reason stated below. At the beginning of cutting, the piston force cannot be exerted to maximum. Therefore, the piston sinks by being overpowered with the top bending force of the material. As a result, the material causes top bend unfavorably.
The reason why the bearing force by the piston cannot be set to maximum from the beginning is as follows. Because the movable cutting tool moving downward at high speed and under high pressure causes the piston shaft to move downward through the billet B, if the pressure of fluid in the cylinder is set to maximum, the pressure in the cylinder rises rapidly, bringing about a very dangerous situation. Therefore, the hydraulic cylinder used for this purpose has a sufficient excess capacity in addition to the capacity required for the restraint force. Further, at the moment the purpose of applying the desired restraint force has been achieved, a quick pressure exhaust valve or the like is activated to prevent the pressure rise in the cylinder thereafter. It is, however, inappropriate from the beginning to use a hydraulic cylinder to resist a load accompanied by impact that is applied at high speed and under high pressure through a long stroke as stated above. The lifetime of the apparatus is also short. A failure of equipment in the part concerned may cause a dangerous accident.

The restrained cutting method and apparatus to which the present invention pertains are categorized as the upholding system among the above-described restraining systems concerned with bar stock cutting machines. The feature of the present invention resides in a restrained cutting method and apparatus for a bar stock cutting machine that have the function of applying resisting pressure to bar stock from the beginning to the end of cutting of the bar stock and allowing the resisting pressure to decrease sharply after the end of the cutting operation.
Patent Document 1: Japanese Patent Application Publication No. Hei 8-318424

### Disclosure of the Invention:

### Problem to be Solved by the Invention:

With the above-described technical background, the present invention was made to attain the following objects.
An object of the present invention is to provide a cutting method capable of obtaining billets or blanks of high quality and also provide an apparatus for the cutting method.
Another object of the present invention is to provide a cutting method capable of obtaining billets or blanks having a minimum amount of deformation and exhibiting high configuration accuracy and also provide an apparatus for the cutting method.

### Means for Solving the Problem:

To attain the above-described objects, the present invention adopts the following means.
A cutting method according to a first aspect of the present invention uses a cutting apparatus having a movable cutting tool driven while being pressed against a stock to be cut to perform cutting. The cutting apparatus further has a fixed cutting tool that supports the stock during the cutting and a bearing device for bearing the stock. The bearing device is positioned in the travel direction of the movable cutting tool to face it across the stock. The stock is cut by shearing in a state where a compressive stress is added to the stock in the axial direction thereof.
The bearing device bears the stock with a bearing force proportional to the pressing force of the movable cutting tool when driven to cut the stock during a period of time from when the stock is distorted to when cracking occurs in the stock.

According to a second aspect of the present invention, the bearing force (P) in the axial direction of the bearing device in the cutting method according to the first aspect of the present invention uses frictional force obtained by pressing against an inclined cam surface.

According to a third aspect of the present invention, the pressing in the cutting method according to the second aspect of the present invention is effected by spring force.

According to a fourth aspect of the present invention, the pressing in the cutting method according to the second aspect of the present invention is effected by a hydraulic pressure obtained by using a cylinder and a piston.

A cutting apparatus according to a fifth aspect of the present invention includes a movable cutting tool driven while being pressed against a stock to be cut to perform cutting, a fixed cutting tool that supports the stock during the cutting, and a bearing device for bearing the stock. The bearing device is positioned in the travel direction of the movable cutting tool to face it across the stock. The stock is cut by shearing in a state where a compressive stress is added to the stock in the axial direction thereof.
The bearing device includes a shoe support shaft for bearing the stock, a first cam provided on the shoe support shaft, a second cam engageable with the first cam, and pressing means for pressing the second cam toward the first cam.

According to a sixth aspect of the present invention, the pressing means in the cutting apparatus according to the fifth aspect of the present invention is a spring.

According to a seventh aspect of the present invention, the pressing means in the cutting apparatus according to the fifth aspect of the present invention is a hydraulic cylinder device. The second cam is connected to a piston of a hydraulic cylinder of the hydraulic cylinder device.

According to an eighth aspect of the present invention, the first or second cam in the cutting apparatus according to any one of the fifth to seventh aspects of the present invention has an inclined cam surface that is inclined relative to the axial direction of the shoe support shaft.

According to a ninth aspect of the present invention, the bearing device of the cutting apparatus according to any one of the fifth to seventh aspects of the present invention further includes withdrawal driving means connected to the shoe support shaft through a link mechanism to drive the shoe support shaft to withdraw.

### Effect of the Invention:

Billets or blanks produced by the cutting method and apparatus according to the present invention have a minimum amount of deformation and hence exhibit high quality and high accuracy.

### Best Mode for Carrying Out the Invention:

### [Principle of Cutting]

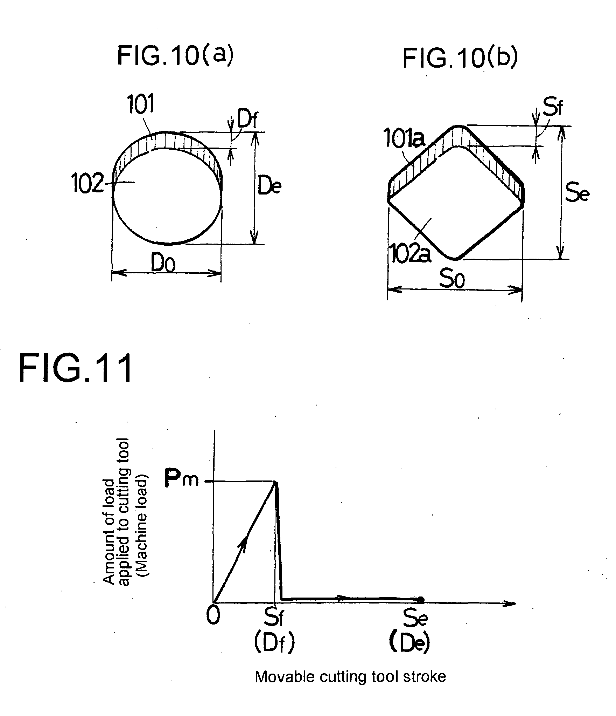

Next, we will explain the principle of cutting on which the present invention is premised. Material to be cut by the cutting machine according to the present invention is bar stock having a circular or square cross-sectional configuration or odd-shaped bar stock in some cases. The material of the stock may be iron, copper, aluminum, special metals such as titanium and nickel, and alloys of these metals. Metals actually used, however, are iron (steel) and iron alloys, and most of them have a circular cross-sectional configuration. Figs. 10(a) and 10(b) are external views showing fractured cross-sections of bar stock and square stock. When steel stock having a circular or square cross-section is cut, the cut surface of the stock has, as shown in Figs. 10(a) and 10(b), a configuration formed from a shear surface 101 (101a) and a fractured surface 102 (102a).
The shear surface 101 is a part formed by shearing with the edge of the cutting tool that contacts the surface of the stock. Meanwhile, the fractured surface 102 is literally a surface created by separation as a result that the bar or square stock as material to be cut is cracked. If the meaning of "cutting start" and "cutting end" in the above-described cutting of bar stock or square stock is explained by a physical phenomenon, the "cutting start" begins at the upper end of the shear surface 101, and the "cutting end" terminates at the lower end of the shear surface 101.

Suppose steel stock (material) having a diameter Dₒ of 100 mm is to be cut, the stock that is held between the movable cutting tool and the fixed cutting tool is distorted gradually as the pressure applied to the movable cutting tool is increased. As shown in Fig. 6, the stock having a diameter of 100 mm is distorted to a diameter of 98 mm. Simultaneously with or slightly after the occurrence of distortion, the edges of the movable and fixed cutting tools begin to cut into the side surfaces of the stock (material) to be cut (i.e. a phenomenon called "cutting" or "shearing" starts). Thereafter, the edges of the movable and fixed cutting tools penetrate into the stock (material). As the penetration of the cutting edges further progresses, cracks are suddenly produced in the stock from near where the cutting edges have cut into the stock.
These series of phenomena, from the distortion of the material to the occurrence of cracking, take place during cutting. Cracks occur from the edges of the upper and lower cutting tools pinching and pressing the material, and when the cracks simultaneously extending downward and upward, respectively, meet each other, separation of the stock and a piece of cut bar steel, i.e. a billet (or a blank; hereinafter referred to as "billet") is completed. As a result of these phenomena, the cut surface of the billet cut off from the stock is as shown in Fig. 10. In Fig. 10, when the cutting machine is operating to form the shear surface 101, a load is being applied to the cutting machine. When the fractured surface 102 is formed, however, there is substantially no load acting in the cutting machine.

Fig. 11 is a chart showing the relationship between the travel stroke of the movable cutting tool (movable cutting tool stroke) when cutting bar stock and the amount of load applied to the cutting tool. In the process of cutting a material, the point where the applied pressure P reaches a maximum is estimated to be somewhere between the time when the movable cutting tool begins to cut into the material while causing a distortion of about 2 mm to the material in the case of the above-described example and the time just before cracking eventually occurs. That is, the cutting tool load increases as the movable cutting tool travels from 0 to the position S_{f}(D_{f}) through its stroke, shown in Fig. 11, and reaches a maximum value Pₘ at the position S_{f}(D_{f}). When the movable cutting tool and the fixed cutting tool have cut into the material toward each other through about 5 mm, fracture due to cracking occurs. Thereafter, no load is applied to the movable and fixed cutting tools of the cutting machine. That is, there is substantially no load during the movable cutting tool stroke from the position S_{f}(D_{f}) to the position Sₑ(Dₑ).
It is deemed that the phenomenon of "top bend" starts when the cutting tool contacts the material and applies a load thereto, causing the material to be distorted, and continues to just before the material is cracked, i.e. while the cutting tool is cutting into the material through about (2+5) mm. Accordingly, the ideal operation of the upholding type restrained cutting machine is to uphold the material throughout the above-described time span, i.e. while the movable cutting tool is moving downward through about 7 mm, with a strong bearing force, e.g. a force not less than 30% of the cutting load, and to allow the upholder to move downward thereafter under no-load conditions in accordance with the stroke of the movable cutting tool. It is ideal to develop a method and apparatus implementing the above-described cutting machine operation. The present invention was made to solve such a technical problem.

### [First Embodiment of Cutting Apparatus 1A]

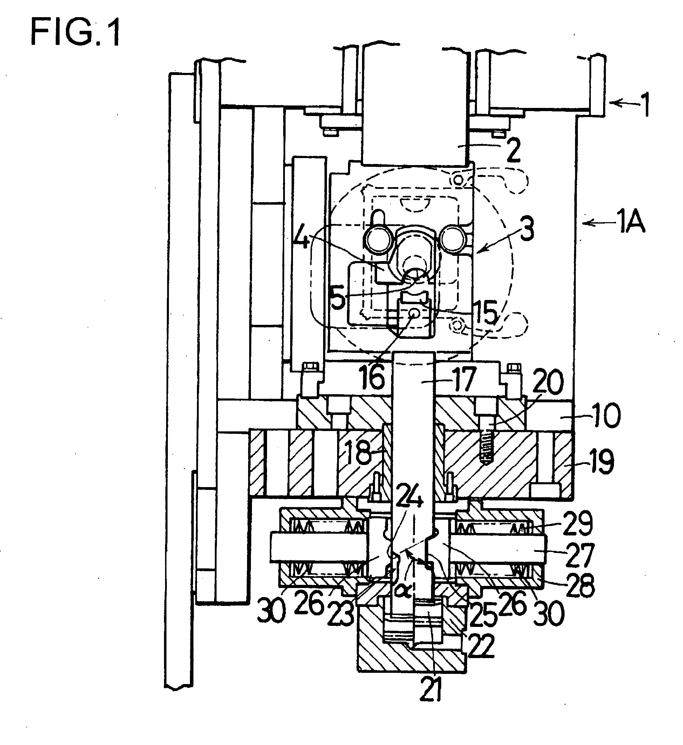

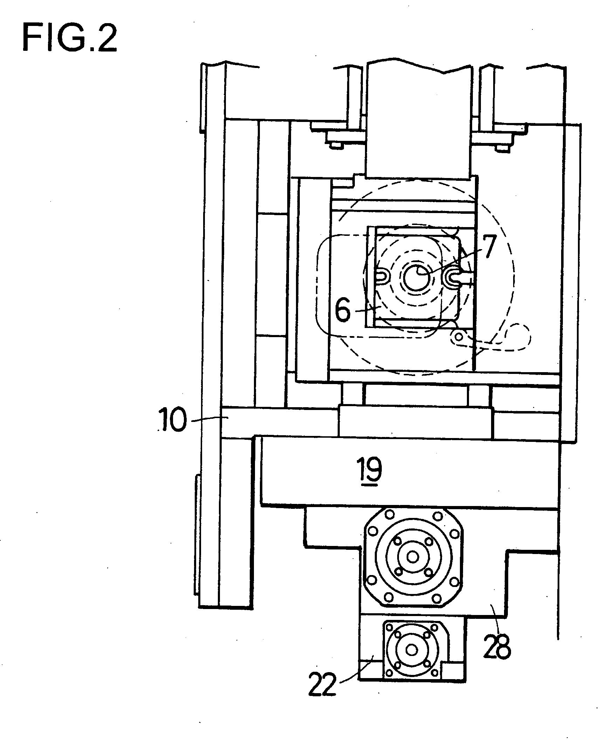

A first embodiment of the cutting apparatus 1A according to the present invention will be explained below with reference to the accompanying drawings. Fig. 1 is a front view of the cutting apparatus, showing a lower part thereof in a sectional view. Fig. 2 is a right-hand side view of Fig. 1. The cutting apparatus 1A has a vertically driven ram 2 in its body 1. Regarding the driving mechanism for the ram 2, a crank mechanism, a lever mechanism, a toggle mechanism, a hydraulic mechanism, and so forth are known. The ram driving mechanism is a well-known technique and does not constitute the gist of the present invention. Therefore, a description thereof is omitted herein. A tool holder 3 is disposed at the lower end of the ram 2. The tool holder 3 is mounted on a machine frame 10 of the cutting machine body 1.
A movable cutting tool 4 is vertically slidably mounted in the tool holder 3. The upper part of the movable cutting tool 4 is secured to the lower end of the ram 2, so that the movable cutting tool 4 is vertically driven by the ram 2. The movable cutting tool 4 is in the shape of a substantially rectangular plate and has at the lower end thereof a cutting edge 5 formed in a semicircular arc shape. A fixed cutting tool 6 is secured to the tool holder 3. The fixed cutting tool 6 has a circular cutting edge 7 of circular cross-sectional configuration. The fixed cutting tool 6 is detachably secured to the tool holder 3 with bolts (not shown). The movable cutting tool 4 and the fixed cutting tool 6 are adapted to cut by shearing action bar stock as material to be cut that has a circular cross-sectional configuration.

A billet bearing shoe 15 is disposed under the movable cutting tool 4. The billet bearing shoe 15 is adapted to bear from below a billet cut off from the stock during cutting. The billet bearing shoe 15 is secured to the upper end of a shoe support shaft 17 with a bolt 16. The shoe support shaft 17 is slidably supported by a bearing 18. The bearing 18 is mounted on a support plate 19. The support plate 19 is secured to the bottom of the machine frame 10 with bolts 20.
The shoe support shaft 17 has a piston 21 formed at the lower end thereof. The piston 21 is vertically movably provided in a cylinder 22. Recessed cams 23 are formed on the outer periphery of a lower part of the shoe support shaft 17 at 180 degrees spaced positions. The recessed cams 23 comprise an inclined surface 24 and a stopper surface 25 parallel to the center axis of the shoe support shaft 17. The inclined surface 24 is at an angle α to the center axis of the shoe support shaft 17.

Meanwhile, the recessed cams 23 are engaged with projecting cams 26 that are substantially in reverse relation to the recessed cams 23 in terms of recess and projection profile. The projecting cams 26 are in the shape of a circular cylinder and have respective cam surfaces on their end faces. Each projecting cam 26 is integrally formed with a shaft 27. The outer peripheral surface of the projecting cam 26 and the shaft 27 are slidably supported by a cylinder 28 having a circular bore 29 therein. Stacked coned disk springs 30 are disposed in the gap between the outer periphery of the shaft 27 and the inner peripheral surface of the circular bore 29. The coned disk springs 30 are adapted to press the projecting cam 26 toward the associated recessed cam 23. Accordingly, the projecting cams 26 are brought into tight contact with the respective recessed cams 23 by the pressing forces of the coned disk springs 30.

### [Operation of First Embodiment]

Next, the operation of the above-described first embodiment will be explained. Stock is fed between feed rollers (not shown) and inserted into the circular cutting edge 7 of the fixed cutting tool 6. The forward end of the stock abuts against a sizing device (not shown) serving as a stopper. When placed in abutment against the sizing device, the material is being pressed in the axial direction thereof (i.e. restrained cutting is performed in this embodiment). The ram 2 of the cutting apparatus 1A begins to move downward, and the movable cutting tool 4, which is integral with the ram 2, also moves downward. The movable cutting tool 4 begins to cut into the material while causing a distortion of about 2 mm, for example, to the material in the case of steel stock having a diameter of 100 mm.
At this time, the billet bearing shoe 15 bears the billet from below. The billet bearing shoe 15 will not be moved by the pressure of the ram 2 moving downward. When the ram 2 further moves downward, the pressing force of the ram 2 causes the projecting cams 26 to move along the inclined surfaces 24 of the recessed cams 23 of the shoe support shaft 17 against the forces of the coned disk springs 30. Assuming that the support force (bearing force) in the axial direction of the shoe support shaft 17 is P, the pressing force of the coned disk springs 30 that is applied to the projecting cams 26 is W, the angle of the inclined surface is α, and the frictional coefficient is µ, then P is given by P=Wtan(α+ρ), where µ=tanρ.

Accordingly, the support force P in the axial direction of the shoe support shaft 17 is determined by the pressing force W of the coned disk springs 30, the frictional coefficient µ, and the angle α. The frictional coefficient µ and the angle α are fixed values, except for the coefficient of static friction. The pressing force W of the coned disk springs 30 increases in proportion to the amount of movement of the projecting cams 26. As has been stated above, the movable cutting tool 4 begins to cut into the material while causing a distortion thereto, and finally cracking occurs in the material, causing fracture. Thus, the material is cut. In this regard, the billet bearing shoe 15 is required to exert the largest support force just before the occurrence of fracture.
The pressing force of the coned disk springs 30 is proportional to the amount of movement because they are a kind of spring. Therefore, it is possible to bear the billet with the support force P in proportion to the shearing force acting on the billet until just before the occurrence of fracture for the reason stated above. Upon completion of the fracture of the billet, the projecting cams 26 sliding along the inclined surfaces 24 run onto the outer peripheral surface of the shoe support shaft 17. Consequently, the billet bearing shoe 15 withdraws so that the billet can drop. Thus, the billet can be borne with the support force P in proportion to the billet shearing force until just before fracture occurs for the reason stated above. Therefore, the sectional configuration of the billet becomes the desired accurate one. When the subsequent cutting operation is started and the stock is fed again, a hydraulic fluid is introduced into the cylinder 22, causing the piston 21 to move upward, thereby returning the shoe support shaft 17 to the cutting position.

### [Second Embodiment of Cutting Apparatus 40A]

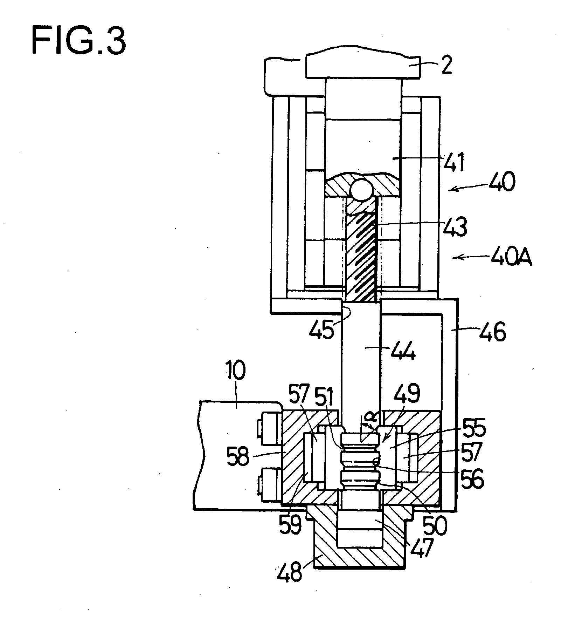

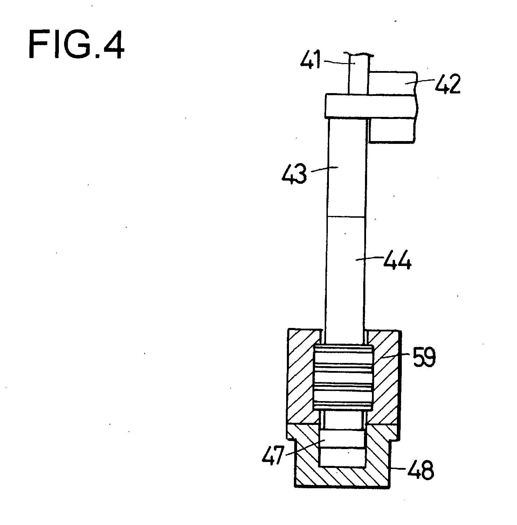

Figs. 3 and 4 show a second embodiment of the cutting apparatus 40A. Fig. 3 is a front view of the cutting apparatus 40A, showing a lower part thereof in a sectional view. Fig. 4 is a right-hand side view of Fig. 3. A tool holder 40 is disposed at the lower end of a ram 2. The tool holder 40 is mounted on a machine frame 10 of the cutting machine body. A movable cutting tool 41 is in the shape of a substantially rectangular plate and has at the lower end thereof a cutting edge formed in a semicircular arc shape. A fixed cutting tool 42 is secured to the tool holder 3. The fixed cutting tool 42 has a circular cutting edge and is detachably secured with bolts (not shown). The movable cutting tool 41 and the fixed cutting tool 42 are adapted to cut bar stock as material to be cut that has a circular cross-sectional configuration.

A billet support 43 is disposed at the lower end of the movable cutting tool 41 with a shoe (not shown) interposed therebetween. The billet support 43 bears a billet from below that is cut off from the stock during cutting. The outer periphery of the billet support 43 is formed with a helical projection, i.e. a coarse-pitched thread. The billet support 43 is threaded into a support bearing shaft 44 and fixed at a predetermined height position with screw. The support bearing shaft 44 is slidably supported by a bearing 45. The bearing 45 is provided on a support plate 46. The support plate 46 is mounted and secured to the machine frame 10.
The support bearing shaft 44 has a piston 47 formed at the lower end thereof. The piston 47 is vertically movably provided in a cylinder 48. Recessed cams 49 are formed on the outer periphery of a lower part of the support bearing shaft 44 at 180 degrees spaced positions. The recessed cams 49 comprise an inclined surface 50 and a stopper surface 51 parallel to the center axis of the support bearing shaft 44. The inclined surface 50 is at an angle α to the center axis of the support bearing shaft 44.

Meanwhile, the recessed cams 49 are engaged with projecting cams 55 that are substantially in reverse relation to the recessed cams 49 in terms of recess and projection profile. The projecting cams 55 are in the shape of a circular cylinder and have respective cam surfaces 56 on their end faces. Each projecting cam 55 is integrally formed with a piston 57. The piston 57 is inserted into a cylinder 58 formed therein with a cylinder bore for the piston 57 to slide therethrough. A cylinder chamber 59 is filled with a hydraulic fluid of predetermined pressure. That is, the piston 57 is adapted to press the projecting cam 55 toward the associated recessed cam 49. Accordingly, the projecting cams 55 are brought into tight contact with the respective recessed cams 49 by the pressing force of the pistons 57. The operation of the second embodiment is substantially the same as that of the first embodiment. Therefore, a description thereof is omitted.

### [Third Embodiment of Cutting Apparatus 60A]

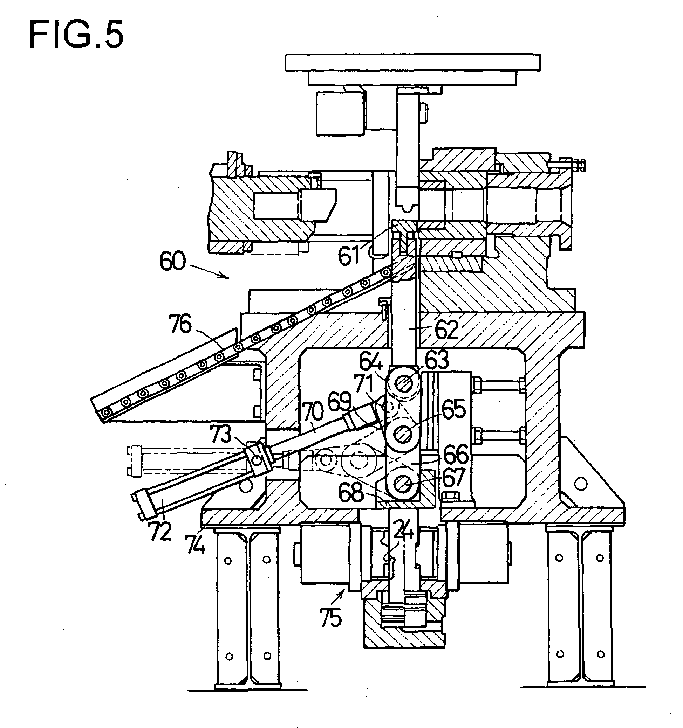

Fig. 5 is a front view of a third embodiment of the cutting apparatus 60, showing a lower part thereof in a sectional view. In the foregoing first and second embodiments, the shoe support shaft 17 or the support bearing shaft 44 is withdrawn downward when the billet is discharged after being cut. In this regard, if the shoe support shaft 17 or the support bearing shaft 44 is not satisfactorily withdrawn, the billet cannot be discharged smoothly. The cutting apparatus 60 is arranged to maximize the distance through which an upper shoe support shaft 62 can be withdrawn. The cutting mechanism of the third embodiment is substantially the same as that of the first and second embodiments. Therefore, a description thereof is omitted.
A shoe 61 for bearing a billet is supported from below by an upper shoe support shaft 62. One end of a first link 64 is pivotably connected to the lower end of the upper shoe support shaft 62 through a shaft 63. The other end of the first link 64 is connected to one end of a second link 66 through a shaft 65.
The other end of the second link 66 is pivotably connected to a lower shoe support shaft 68 through a shaft 67. Further, the shaft 65 pivotably supports one end of a third link 69.

The other end of the third link 69 is pivotably connected to the distal end of a piston rod 70 through a shaft 71. The piston rod 70 is united with a cylinder 72 to constitute a cylinder driving mechanism. The cylinder 72 is pivotably provided on a machine frame 74 of the cutting machine body through a shaft 73. That is, a toggle mechanism is formed by the first link 64, the second link 66, the third link 69, the shafts 63, 65, 67 and 71, etc.
The lower shoe support shaft 68 is connected to a bearing mechanism 75 similar to that in the foregoing first embodiment. The structure and function of the bearing mechanism 75 are the same as in the first embodiment. Therefore, a description thereof is omitted. With the above-described toggle mechanism, when cutting is completed, the cylinder driving mechanism is activated to retract the piston rod 70. Consequently, the first link 64, the second link 66 and the third link 69 move to respective positions shown by the chain lines, thereby allowing the upper shoe support shaft 62 to be moved downward. The cut-off billet is discharged through a chute 76.

### Brief Description of the Drawings:

[Fig. 1] Fig. 1 is a front view of a cutting apparatus according to a first embodiment, showing a bearing mechanism thereof in a sectional view.
[Fig. 2] Fig. 2 is a right-hand side view of Fig. 1.
[Fig. 3] Fig. 3 is a front view of a cutting apparatus according to a second embodiment, showing a bearing mechanism thereof in a sectional view.
[Fig. 4] Fig. 4 is a right-hand side view of Fig. 3.
[Fig. 5] Fig. 5 is a front view of a cutting apparatus according to a third embodiment, showing a bearing mechanism thereof in a sectional view.
[Fig. 6] Figs. 6(a), (b) and (c) are external views of a blank, showing defects in shape, such as distortion, inclination, and weight variation.
[Fig. 7] Figs. 7(a) to (e) are views schematically showing the progress of deformation of a billet during cutting.
[Fig. 8] Fig. 8 is a schematic view showing deformation of a billet when cut by an axially restrained cutting system.
[Fig. 9] Fig. 9 is a schematic view showing deformation of a billet when cut by a twin-round cutter restrained cutting system.
[Fig. 10] Figs. 10(a) and 10(b) are plan-sectional views which are external views showing fractured cross-sections of bar stock and square stock.
[Fig. 11] Fig. 11 is a chart showing the relationship between the travel stroke of a movable cutting tool when cutting bar stock and the amount of load applied to the cutting tool (machine load).

### Explanation of Reference Numerals:

1, 74···cutting machine body
2···ram
3···tool holder
4, 41···movable cutting tool
6, 42...fixed cutting tool
10···machine frame
15···billet bearing shoe
17···shoe support shaft
21···piston
22···cylinder
26···projecting cam
30···coned disk spring

## Claims

1. A cutting method using a cutting apparatus, said cutting apparatus including:
a movable cutting tool driven while being pressed against a stock to be cut to perform cutting;
a fixed cutting tool that supports said stock during said cutting; and
a bearing device for bearing said stock, said bearing device being positioned in a travel direction of said movable cutting tool to face it across said stock;
wherein said stock is cut by shearing in a state where a compressive stress is added to said stock in an axial direction thereof;
wherein said bearing device bears said stock with a bearing force proportional to a pressing force of said movable cutting tool when driven to cut said stock during a period of time from when said stock is distorted to when cracking occurs in said stock.

2. A cutting method according to claim 1, wherein said bearing force (P) in an axial direction of said bearing device uses frictional force obtained by pressing against an inclined cam surface.

3. A cutting method according to claim 2, wherein said pressing is effected by spring force.

4. A cutting method according to claim 2, wherein said pressing is effected by a hydraulic pressure obtained by using a cylinder and a piston.

5. A cutting apparatus comprising:
a movable cutting tool driven while being pressed against a stock to be cut to perform cutting;
a fixed cutting tool that supports said stock during said cutting; and
a bearing device for bearing said stock, said bearing device being positioned in a travel direction of said movable cutting tool to face it across said stock;
wherein said stock is cut by shearing in a state where a compressive stress is added to said stock in an axial direction thereof;
wherein said bearing device comprises:
a shoe support shaft for bearing said stock;
a first cam provided on said shoe support shaft;
a second cam engageable with said first cam; and
pressing means for pressing said second cam toward said first cam.

6. A cutting apparatus according to claim 5, wherein said pressing means is a spring.

7. A cutting apparatus according to claim 5, wherein said pressing means is a hydraulic cylinder device, said second cam being connected to a piston of a hydraulic cylinder of said hydraulic cylinder device.

8. A cutting apparatus according to any one of claims 5 to 7, wherein said first cam or said second cam has an inclined cam surface that is inclined relative to an axial direction of said shoe support shaft.

9. A cutting apparatus according to any one of claims 5 to 7, wherein said bearing device further comprises:
withdrawal driving means connected to said shoe support shaft through a link mechanism to drive said shoe support shaft to withdraw.
